# EUROPEAN PATENT SPECIFICATION

(11) **EP 3 054 540 B1**
(45) Date of publication and mention of the grant of the patent: **06.04.2022**
(21) Application number: 16154764.1
(22) Date of filing: 09.02.2016
(51) Int. Cl.: H01S 3/03, H01S 3/08, H01S 3/223, H01S 3/081, H01S 3/07

(54) **FLAT-FOLDED CERAMIC SLAB LASERS**
ZUSAMMENGEKLAPPTE KERAMISCHE PLATTENLASER
LASERS À PLAQUES CÉRAMIQUES PLIÉES À PLAT

(30) Priority: 09.02.2015 US 201514617878
(43) Date of publication of application: 10.08.2016
(73) Proprietor: Iradion Laser, Inc., North Smithfield, RI 02896 (US)
(72) Inventor: MORROW, Clifford E., North Kingstown, RI Rhode Island 02852 (US); WEINGARTNER, Wendelin, Brooklyn, NY 11222 (US)
(74) Representative: HGF

(56) References cited:
- EP-A1- 1 184 946
- JP-A- S5 929 481
- US-A- 5 781 579

## Description

### TECHNICAL FIELD

The present disclosure relates, generally, to lasers and, more specifically, to flat-folded ceramic slab lasers.

### BACKGROUND

An example of a waveguide resonator is disclosed in EP 1 184 946 A1, wherein a gas laser has an optics system and a mode-masking aperture. The function of the mode-masking aperture can be provided by the inner diameter of a circular cross section of the beam guiding chamber. The optics system is adjustable between two settings in each of which any higher-order modes of the laser beam are masked out. The Gaussian mode can be generated in one of the two settings, and the ring mode in the other setting.

In waveguide resonators, the resonator walls influence the propagation of a laser beam and shape its mode, to a certain extent. A waveguide resonator may be defined as having a Fresnel number (*N_{F}*=*a*²/(*λL*), where *a* is half of the resonator aperture, *λ* is the wavelength of the laser beam, and L is the resonator length) that is less than 0.5. One advantage of using a waveguide resonator to form a laser beam is that it allows a decrease in the transverse dimensions of the laser beam inside the waveguide. Smaller transverse dimensions permit an increase in the diffusive cooling efficiency of a laser gas bounded by the waveguide by allowing efficient transportation of waste heat to the walls of the waveguide resonator. With such efficient cooling, the plasma temperature may be lowered, thereby increasing gain, and the pressure of the laser gas may be increased. In sum, waveguide resonators may lead to higher power per volume of laser gas and faster optical response to radio frequency (RF) pulses of pump energy.

"Slab" lasers take advantage of efficient cooling in a waveguide axis of the resonator, while allowing the other axis of the resonator to behave with free-space characteristics. Power can be coupled out of the laser cavity by designing the resonator to be unstable in the free-space direction of the slab waveguide. By way of example, the resonator of the slab laser may take the form of a negative or positive branch unstable resonator (the negative branch design being more popular, for alignment stability reasons). In a negative branch unstable resonator, light is coupled out of the laser cavity by allowing recirculating energy bouncing between mirrors of the resonator to "walk off' an edge of one end mirror.

The power output of a slab laser may be increased by making the slab waveguide wider (along its free-space direction), within limits imposed by the physical structure of the laser and/or by the required quality of the beam to be emitted. The power output of a slab laser may also be increased by making the slab waveguide longer (along the length of the resonator), which may be advantageous when considering the spatial and longitudinal modes. However, simply increasing the length of a laser body may be undesirable in the market and/or prohibitively expensive with a ceramic body.

### SUMMARY

The present invention is recited in the appended claims.

According to one aspect, a laser is defined in claim 1.

In some embodiments, each of the first, second, and third slab waveguide sections may exhibit free-space characteristics in the plane defined by the first, second, and third axes. Each of the first, second, and third slab waveguide sections may exhibit waveguide characteristics in a direction perpendicular to the plane defined by the first, second, and third axes. Each of the first, second, and third slab waveguide sections may be partially bounded by ceramic walls of the ceramic body that extend parallel to the plane defined by the first, second, and third axes. The ceramic walls of the ceramic body that extend parallel to the plane defined by the first, second, and third axes may function as waveguides.

In some embodiments, the laser may further comprise a plurality of electrodes positioned outside of the ceramic body, where the plurality of electrodes are configured to excite portions of the laser gas through the ceramic body when an excitation signal is applied to the plurality of electrodes. The plurality of electrodes may be positioned such that only portions of the laser gas in the first and second slab waveguide sections are excited when the excitation signal is applied to the plurality of electrodes. The plurality of electrodes may be positioned such that portions of the laser gas in the third slab waveguide section are not excited when the excitation signal is applied to the plurality of electrodes. The plurality of electrodes may be positioned such that portions of the laser gas between the first and second fold mirrors are not excited when the excitation signal is applied to the plurality of electrodes. The ceramic body and the plurality of electrodes may be supported within an airtight enclosure formed of a non-ceramic material.

In some embodiments, the first and second end mirrors form an unstable negative branch resonator. A focus of the unstable negative branch resonator may be positioned between the first and second fold mirrors. The focus of the unstable negative branch resonator may be positioned at a midpoint between the first and second fold mirrors.

In some embodiments, a radius of a reflective surface of the first end mirror may be smaller than a radius of a reflective surface of the second end mirror. The second slab waveguide section may extend along the second axis a greater distance than the first slab waveguide section extends along the first axis. A first distance between the first end mirror and the first fold mirror may be smaller than a second distance between the second end mirror and the second fold mirror.

In some embodiments, the ceramic body may be formed of a material selected from the group consisting of Al₂O₃, BeO, and AlN. The laser gas may be a mixture comprising CO₂.

According to another aspect, a laser may comprise a ceramic body defining a chamber containing a laser gas. The chamber may comprise a first slab waveguide section extending along a first axis and a second slab waveguide section extending along a second axis. The first and second slab waveguide sections may each exhibit free-space characteristics in a plane defined by the first and second axes and waveguide characteristics in a direction perpendicular to the plane defined by the first and second axes. The laser may further comprise a fold mirror positioned near an intersection of the first and second axes. A first angle between the first axis and a mirror axis that is perpendicular to a reflective surface of the fold mirror may be greater than 35 degrees and less than 55 degrees, and a second angle between the second axis and the mirror axis may be greater than 35 degrees and less than 55 degrees. As such, the first and second slab waveguide sections are configured to waveguide recirculating light that is polarized orthogonal to the plane defined by the first and second axes.

### BRIEF DESCRIPTION OF THE DRAWINGS

The concepts described in the present disclosure are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels may be repeated among the figures to indicate corresponding or analogous elements.
FIG. 1 is a cross-sectional view of one illustrative embodiment of a flat-folded ceramic slab laser;
FIG. 2 is a plot of reflection curves comparing the reflectivity of a dielectric ceramic surface (particularly, Al₂O₃) and a metal surface (particularly, Al);
FIG. 3 is a cross-sectional view of the flat-folded ceramic slab laser of FIG. 1, showing one illustrative optical path followed by photons reflecting between mirrors of the laser; and
FIG. 4 is a cross-sectional view of the flat-folded ceramic slab laser of FIG. 1, showing one illustrative embodiment of the electrically pumped regions of the laser.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the present disclosure.

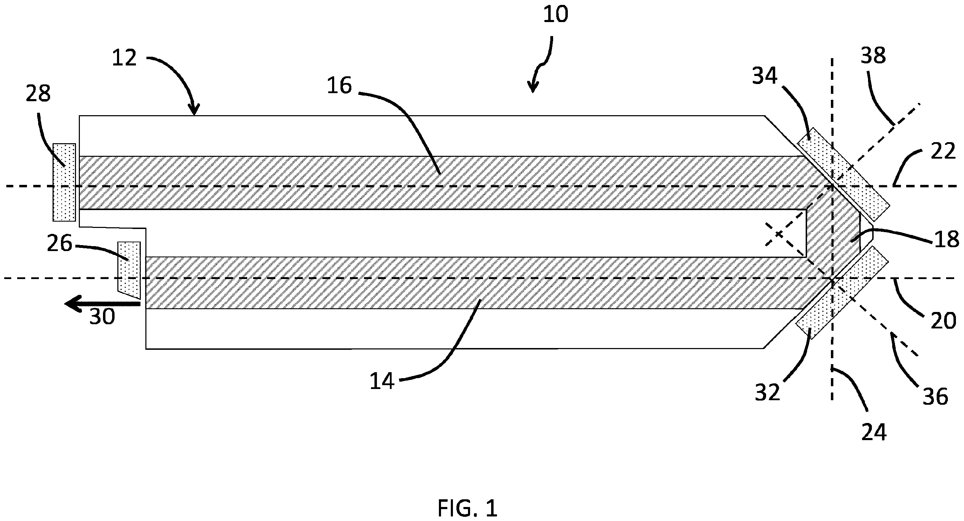

Referring to FIG. 1, one illustrative embodiment of a flat-folded ceramic slab laser 10 is shown in a cross-sectional view. This illustrative embodiment of laser 10 employs two fold mirrors 32, 34, each disposed at 45 degrees to normal incidence, to provide a flat-folded, "U"-shaped resonator. This folding of the resonator increases its length, thereby increasing the power output of the laser 10, without requiring an increase in the overall length of the body of the laser 10. As discussed further below, such flat folding is uniquely made possible by the fact that the laser 10 includes a slab waveguide made of ceramic walls.

In particular, the laser 10 includes a ceramic body 12 defining a chamber containing a laser gas. In the illustrative embodiment, the ceramic body 12 is formed of Aluminum Oxide (Al₂O₃, also referred to in the art as "Alumina"). In other embodiments, the ceramic body 12 may be formed of another ceramic material, such as Beryllium Oxide (BeO) or Aluminum Nitride (AlN), by way of example. In still other embodiments, it is contemplated that the body of the laser 10 may be formed of another suitable dielectric material, such as certain types of glass or glass ceramics. In the illustrative embodiment of FIG. 1, the ceramic body 12 is formed as a monolithic ceramic component. In other embodiments, however, the ceramic body 12 may be formed of a plurality of ceramic components. The plurality of ceramic components may be joined together (for example, via brazing, welding, glass fritting, etcetera) or may be supported relative to one another by a non-ceramic enclosure.

In the illustrative embodiment, the laser gas contained in the chamber defined by the ceramic body 12 is a mixture comprising Carbon Dioxide (CO₂) as well as other gases. Those of skill in the art will appreciate that, in other embodiments, another suitable gas or mixture of gases may be used in the laser 10. In the illustrative embodiment, the ceramic body 12, together with other components of the laser 10 (e.g., mirror mounts), forms an airtight, or vacuum-sealed, enclosure containing the laser gas. In other embodiments, however, the ceramic body 12 may be contained within another airtight enclosure (e.g., made of a non-ceramic material, such as metal).

As shown in FIG. 1, in the illustrative embodiment of laser 10, the chamber defined by the ceramic body 12 comprises three slab waveguide sections 14, 16, 18. One end of the slab waveguide section 18 is positioned adjacent (and seamlessly connects) to an end of the slab waveguide section 14, while the opposite end of the slab waveguide section 18 is positioned adjacent (and seamlessly connects) to an end of the slab waveguide section 16. The slab waveguide section 14 extends along an axis 20. The slab waveguide section 16 extends along an axis 22. The slab waveguide section 18 extends along an axis 24. In other words, a length dimension of each of the slab waveguide sections 14, 16, 18 runs generally parallel to a respective one of the axes 20, 22, 24. In the illustrative embodiment of FIG. 1, the axes 20, 22 are parallel to one another, while the axis 24 is perpendicular to both of the axes 20, 22, giving the chamber a generally "U"-shaped cross-section. While the illustrative embodiment is depicted as having three slab waveguide sections 14, 16, 18, it is contemplated that the chamber defined by the ceramic body 12 may include any number of slab waveguide sections in other non-claimed configurations. . Similarly, while the length dimension of each slab waveguide section 14, 16, 18 is depicted as being disposed at 90 degrees to the length dimension of each adjacent slab waveguide section 14, 16, 18 in the illustrative embodiment, it is contemplated that adjacent slab waveguide sections may be disposed at other angles (e.g., 70 degrees to 110 degrees) to one another in other non-claimed configurations.

Each of the slab waveguide sections 14, 16, 18 are partially bounded by ceramic walls of the ceramic body 12 that extend parallel to a plane defined by the axes 20, 22, 24 (e.g., the plane of FIG. 1) and that function as waveguides in the slab waveguide sections 14, 16, 18. In other words, the ceramic walls that extend parallel to the plane defined by the axes 20, 22, 24 are spaced apart by a height that is small enough to be considered a waveguide (e.g., having a Frcsncl number less than 0.5). Meanwhile, the width of each of the slab waveguide sections 14, 16, 18 is large enough to be considered completely free-space. In the illustrative embodiment, each of the slab waveguide sections 14, 16, 18 have the same height and the same width. It will be appreciated by those of skill in the art that suitable values for the height and the width of the slab waveguide sections 14, 16, 18 in particular embodiments of the laser 10 will be dependent upon various parameters, including the wavelength of the laser beam and the length of the resonator of the laser 10. In any case, each of the slab waveguide sections 14, 16, 18 exhibits waveguide characteristics in a direction perpendicular to the plane defined by the axes 20, 22, 24 and exhibits free-space characteristics in the plane defined by the axes 20, 22, 24. As will be appreciated from the foregoing, each of the slab waveguide sections 14, 16, 18 is arranged in the same plane.

The laser 10 also includes a pair of end mirrors 26, 28 that form a resonator (via reflections by the two fold mirrors 32, 34) in the chamber defined by the ceramic body 12. The end mirror 26 is positioned at an end of the slab waveguide section 14 that is opposite the end of the slab waveguide section 14 adjacent the slab waveguide section 18. Similarly, the end mirror 28 is positioned at an end of the slab waveguide section 16 that is opposite the end of the slab waveguide section 16 adjacent the slab waveguide section 18. As shown in FIG. 1, in the illustrative embodiment of laser 10, a concave radius of a reflective surface of the end mirror 26 is smaller than a concave radius of a reflective surface of the end mirror 28, so that optical power 30 can be coupled out of the resonator in the free-space direction of the slab waveguide. The end mirror 26 may have a sharp edge for this purpose.

As mentioned above, the illustrative embodiment of laser 10 also includes a number of fold mirrors 32, 34, which serve to optically connect the slab waveguide sections 14, 16, 18. The fold mirrors 32, 34 are illustratively embodied as flat mirrors, as shown in FIG. 1, but could alternatively be embodied as slightly convex or concave mirrors in other embodiments. The fold mirror 32 is positioned near an intersection of the axes 20, 24, at a 45-degree angle to both of the axes 20, 24. In other words, an angle between the axis 20 and a mirror axis 36 that is perpendicular to a reflective surface of the fold mirror 32 is 45 degrees, while an angle between the axis 24 and the mirror axis 36 is 45 degrees. Similarly, the fold mirror 34 is positioned near an intersection of the axes 22, 24, at a 45-degree angle to both of the axes 22, 24. In other words, an angle between the axis 22 and a mirror axis 38 that is perpendicular to a reflective surface of the fold mirror 34 is 45 degrees, while an angle between the axis 24 and the mirror axis 38 is 45 degrees. In other non-claimed configurations it is contemplated that each fold mirror may be disposed, relative to each adjacent slab waveguide section, at any angle that is greater than 35 degrees and less than 55 degrees (e.g., the fold mirror 32 might be disposed such that the angle between the axis 36 and either of the axes 20, 24 was greater than 35 degrees and less than 55 degrees).

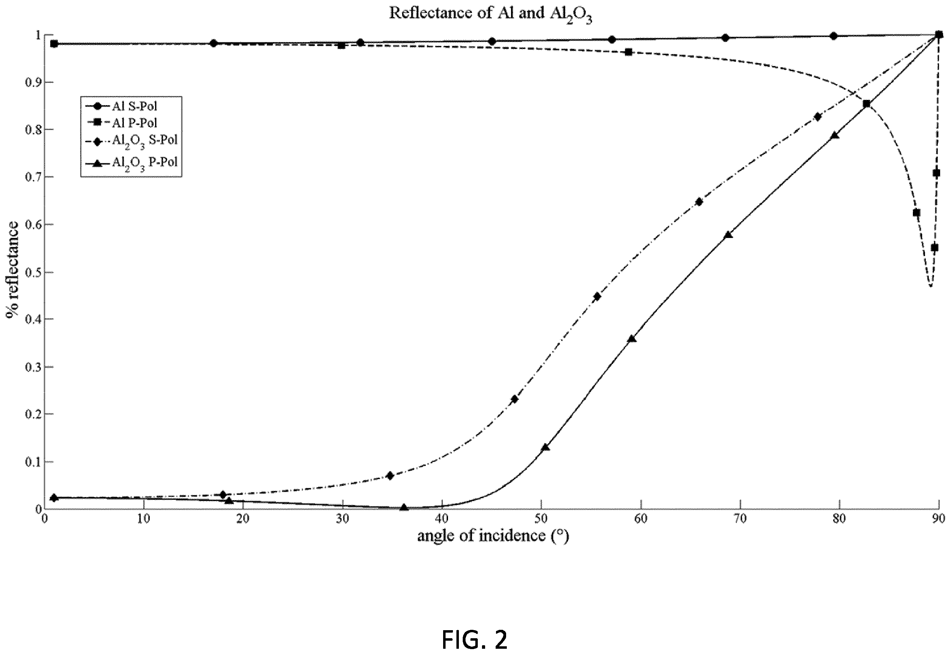

As noted above, this flat folding of the resonator of the laser 10 is uniquely made possible due to the slab waveguide sections 14, 16, 18 being defined by the ceramic body 12. While some prior art designs have attempted to utilize folding of slab waveguide resonators to achieve compactness of the laser body, these designs typically employ fold mirrors that reflect the cavity flux at near normal angles (generally, less than 15 degrees from normal incidence). At such low angles, the fold mirrors reflect both "S" polarization (S-Pol) and "P" polarization (P-Pol) of the cavity flux nearly equally well. In contrast, fold mirrors used at 45 degrees (from normal incidence) will reflect S-Pol with higher reflectivity than P-Pol. For clarity, when light reflects off a metal surface at an angle greater than 0 degrees (from normal incidence), light waves that have their electric fields oriented in the plane of reflection (i.e., P-Pol) will have greater losses than light waves that have their electric fields oriented perpendicular to the plane of reflection (i.e., S-Pol). This difference in reflectivity is very pronounced at angles around 45 degrees and greater (see FIG. 2). In view of the foregoing, S-Pol reflections are strongly favored by metal (e.g., aluminum-based) waveguides over P-Pol reflections. As such, slab lasers including one or more metal waveguide walls become polarized parallel to the plane of the slab. This polarization requires any cavity folds in such lasers to be either near normal reflections (e.g., using fold mirrors oriented at less than 15 degrees from normal incidence) or orientated in a complex three-dimensional relationship (which creates difficulty in building and cooling the laser).

In contrast to metal waveguides, dielectric materials (e.g., ceramics) have the ability to waveguide light in either S-Pol or P-Pol with substantially equal efficiency. As such, a slab waveguide in which the waveguide walls are formed from a ceramic material (e.g., Al₂O₃) will not prefer one polarization of light relative to another. FIG. 2 illustrates a plot of reflection curves comparing the reflectivity of a ceramic surface (particularly, Al₂O₃) and a metal surface (particularly, Al) for both S-Pol and P-Pol. As can be seen in FIG. 2, the S-Pol and P-Pol curves for the ceramic are quite close to each other at high waveguide angles approaching 90 degrees, while the S-Pol and P-Pol curves for the metal are very different as the waveguide angle leaves 90 degrees even slightly. The plots of FIG. 2 demonstrate that a ceramic waveguide surface will not select for polarization while a metal waveguide surface will do so.

As the slab waveguide sections 14, 16, 18 of the laser 10 are defined by the ceramic body 12 (and, thus, waveguide both S-Pol and P-Pol with substantially equal efficiency), the resonator folds of the laser 10 can be kept in the same plane even with the fold mirrors 32, 34 oriented at 45 degrees from each of the axes 20, 22, 24. As discussed above, such an arrangement would not be optically efficient if the slab waveguide included one or more metal waveguide walls. Having the slab waveguide sections 14, 16, 18 oriented in the same plane (as in the illustrative embodiment of laser 10) allows for a simpler resonator structure that is easier to manufacture and easier to cool during operation. Additionally, the S-Pol reflection preference of the fold mirrors 32, 34 oriented at 45 degrees to normal incidence will select the polarization orientation of the cavity. In particular, a laser beam 30 reflected by the fold mirrors 32, 34 will be polarized orthogonal to the plane of the slab waveguide sections 14, 16, 18 (i.e., the plane defined by the axes 20, 22, 24). With the laser beam 30 polarized in this manner, beam mixing of multiple lasers 10 could optionally be achieved using the methods taught in U.S. Patent No. 4,982,166.

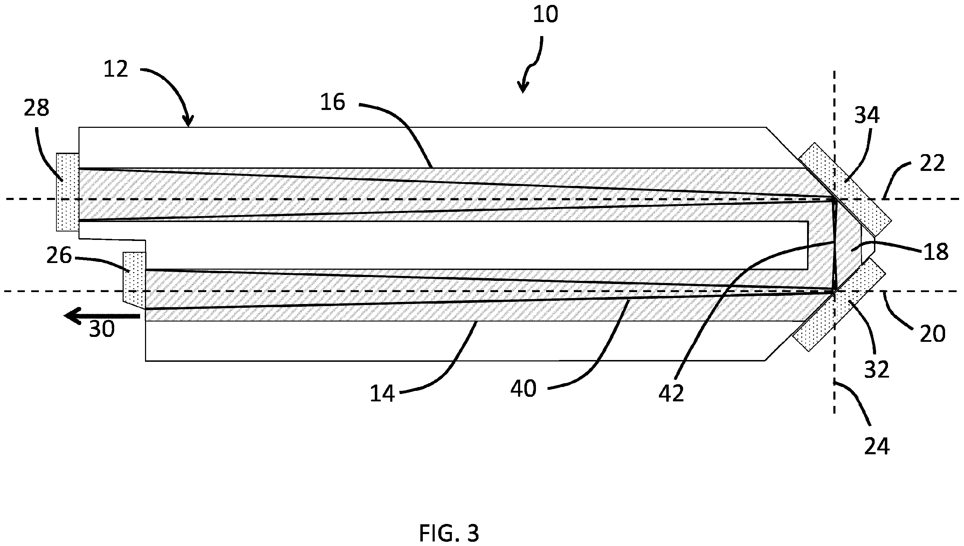

Referring now to FIG. 3, another cross-sectional view of the laser 10, showing one illustrative optical path followed by photons reflecting between the end mirrors 26, 28 (via the fold mirrors 32, 34), is shown. In the illustrative embodiment of FIG. 3, the end mirrors 26, 28 form an unstable negative branch resonator 40. As discussed above, the concave radius of the reflective surface of the end mirror 26 is smaller than the concave radius of the reflective surface of the end mirror 28, so that optical power 30 can be coupled out of the resonator in the free-space direction of the slab waveguide. As shown in FIG. 3, the slab waveguide section 16 extends along the axis 22 a greater distance than the slab waveguide section 14 extends along the axis 20. In other words, a distance between the end mirror 26 and the fold mirror 32 (measured along the axis 20) is smaller than a distance between the end mirror 28 and the fold mirror 34 (measure along the axis 22). These differing distances allow a focus 42 of the unstable negative branch resonator 40 to be positioned between the fold mirrors 32, 34 (as opposed to being positioned at or near one of the fold mirrors 32, 34). Such an arrangement minimizes the flux intensity at the reflective surfaces of the fold mirrors 32, 34 (which may be particularly high at the focus 42), so as to avoid damage to either of the fold mirrors 32, 34. In the illustrative embodiment of FIG. 3, the focus 42 of the unstable negative branch resonator 40 is positioned at a midpoint between the fold mirrors 32, 34 (measured along the axis 24). Such positioning of the focus 42 may be achieved when the ratio between the distance from the end mirror 26 to the fold mirror 32 and the distance from the end mirror 28 to the fold mirror 34 is equal to the ratio between the radii of the reflective surfaces of the end mirrors 26, 28.

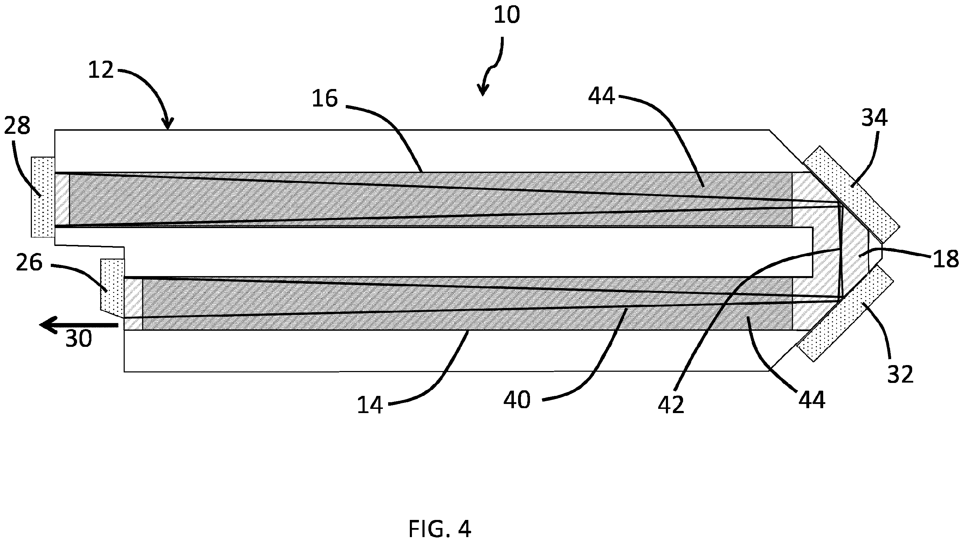

Referring now to FIG. 4, another cross-sectional view of the laser 10, showing one illustrative embodiment of the electrically pumped regions 44 of the laser 10, is shown. The laser 10 further includes a plurality of electrodes (not shown) positioned outside of the ceramic body 12, which are configured to excite portions 44 of the laser gas through the ceramic body 12 when an excitation signal is applied to the electrodes. In the illustrative embodiment shown in FIG. 4, the electrodes of the laser 10 are positioned such that only portions 44 of the laser gas in the slab waveguide sections 14, 16 are excited when the excitation signal is applied to the electrodes. In other words, the electrodes of the laser 10 are positioned such that portions of the laser gas in the slab waveguide section 18 (e.g., portions of the laser gas between the fold mirrors 32, 34) are not excited when the excitation signal is applied to the electrodes. By not wasting pumping energy in the slab waveguide section 18, where half the cavity photons are confined to a relatively small area, the pumping efficiency of the laser 10 may be increased.

While certain illustrative embodiments have been described in detail in the figures and the foregoing description, such an illustration and description is to be considered as exemplary and that the scope of the present invention is determined by the appended claims.

## Claims

1. A laser (10) comprising:
a ceramic body (12) defining a chamber containing a laser gas, the chamber comprising a first slab waveguide section (14) extending along a first axis (20), a second slab waveguide section (16) extending along a second axis (22), and third slab waveguide section (18) extending along a third axis (24), wherein the first and second axes are parallel to one another, the third axis is perpendicular to both the first and second axes, and respective first ends of the first and second slab waveguide sections are positioned adjacent opposite ends of the third slab waveguide section, wherein the first, second, and third slab waveguide sections each have a height extending perpendicular to a plane defined by the first, second, and third axes, the first slab waveguide section has a first width extending perpendicular to the first axis and to the height of the first slab waveguide section, the second slab waveguide section has a second width extending perpendicular to the second axis and to the height of the second slab waveguide section, and the third slab waveguide section has a third width extending perpendicular to the third axis and to the height of the third slab waveguide section, and wherein the first, second, and third widths are each larger than the height;
a first end mirror (26) positioned at a second end of the first slab waveguide section that is opposite the first end of the first slab waveguide section;
a second end mirror (28) positioned at a second end of the second slab waveguide section that is opposite the first end of the second slab waveguide section;
a first fold mirror (32) positioned near an intersection of the first and third axes at a 45-degree angle to both the first and third axes; and
a second fold mirror (34) positioned near an intersection of the second and third axes at a 45-degree angle to both the second and third axes;
wherein the first, second, and third slab waveguide sections are configured to waveguide recirculating light that is polarized orthogonal to a plane defined by the first, second, and third axes.

2. The laser of claim 1 wherein each of the first, second, and third slab waveguide sections exhibits free-space characteristics in the plane defined by the first, second, and third axes.

3. The laser of claim 2 wherein each of the first, second, and third slab waveguide sections exhibits waveguide characteristics in a direction perpendicular to the plane defined by the first, second, and third axes.

4. The laser of any preceding claim wherein each of the first, second, and third slab waveguide sections are partially bounded by ceramic walls of the ceramic body that extend parallel to the plane defined by the first, second, and third axes.

5. The laser of claim 4 wherein the ceramic walls of the ceramic body that extend parallel to the plane defined by the first, second, and third axes function as waveguides.

6. The laser of any preceding claim further comprising a plurality of electrodes positioned outside of the ceramic body, the plurality of electrodes being configured to excite portions (44) of the laser gas through the ceramic body when an excitation signal is applied to the plurality of electrodes.

7. The laser of claim 6 wherein the plurality of electrodes are positioned such that only portions (44) of the laser gas in the first and second slab waveguide sections are excited when the excitation signal is applied to the plurality of electrodes.

8. The laser of claim 6 wherein the plurality of electrodes are positioned such that portions of the laser gas in the third slab waveguide section are not excited when the excitation signal is applied to the plurality of electrodes.

9. The laser of claim 6 wherein the plurality of electrodes are positioned such that portions of the laser gas between the first and second fold mirrors are not excited when the excitation signal is applied to the plurality of electrodes.

10. The laser of claim 6 wherein the ceramic body and the plurality of electrodes are supported within an airtight enclosure formed of a non-ceramic material.

11. The laser any preceding of claim, wherein the first and second end mirrors form an unstable negative branch resonator (40).

12. The laser of claim 11 wherein a focus of the unstable negative branch resonator is positioned between the first and second fold mirrors; optionally the focus (42) of the unstable negative branch resonator is positioned at a midpoint between the first and second fold mirrors.

13. The laser of any preceding claim wherein a radius of a reflective surface of the first end mirror is smaller than a radius of a reflective surface of the second end mirror.

14. The laser of any preceding claim wherein the second slab waveguide section extends along the second axis a greater distance than the first slab waveguide section extends along the first axis.

15. The laser of any preceding claim wherein a first distance between the first end mirror and the first fold mirror is smaller than a second distance between the second end mirror and the second fold mirror.

## Patentansprüche

1. Laser (10), umfassend:
einen Keramikkörper (12), der eine Kammer definiert, die ein Lasergas enthält, wobei die Kammer einen ersten Plattenwellenleiterabschnitt (14) umfasst, der sich entlang einer ersten Achse (20) erstreckt, einen zweiten Plattenwellenleiterabschnitt (16), der sich entlang einer zweiten Achse (22) erstreckt, und dritten Plattenwellenleiterabschnitt (18), der sich entlang einer dritten Achse (24) erstreckt, wobei die ersten und zweiten Achsen parallel zueinander sind, die dritte Achse senkrecht zu sowohl den ersten als auch zweiten Achsen ist und jeweilige erste Enden der ersten und zweiten Plattenwellenleiterabschnitte neben gegenüberliegenden Enden des dritten Plattenwellenleiterabschnitts positioniert sind, wobei die ersten, zweiten und dritten Plattenwellenleiterabschnitte jeweils eine Höhe aufweisen, die sich senkrecht zu einer von den ersten, zweiten und dritten Achsen definierten Ebene erstreckt, der erste Plattenwellenleiterabschnitt eine erste Breite aufweist, die sich senkrecht zu der ersten Achse und zu der Höhe des ersten Plattenwellenleiterabschnitts erstreckt, der zweite Plattenwellenleiterabschnitt eine zweite Breite aufweist, die sich senkrecht zu der zweiten Achse und zu der Höhe des zweiten Plattenwellenleiterabschnitts erstreckt, und der dritte Plattenwellenleiterabschnitt eine dritte Breite aufweist, die sich senkrecht zu der dritten Achse und zu der Höhe des dritten Plattenwellenleiterabschnitts erstreckt, und wobei die ersten, zweiten und dritten Breiten jeweils größer als die Höhe sind;
einen ersten Endspiegel (26), der an einem zweiten Ende des ersten Plattenwellenleiterabschnitts positioniert ist, das gegenüber dem ersten Ende des ersten Plattenwellenleiterabschnitts ist;
einen zweiten Endspiegel (28), der an einem zweiten Ende des zweiten Plattenwellenleiterabschnitts positioniert ist, das gegenüber dem ersten Ende des zweiten Plattenwellenleiterabschnitts ist;
einen ersten Klappspiegel (32), der nahe einem Schnittpunkt der ersten und der dritten Achsen unter einem 45-Grad-Winkel sowohl zu den ersten als auch dritten Achsen positioniert ist; und
einen zweiten Klappspiegel (34), der nahe einem Schnittpunkt der zweiten und dritten Achsen unter einem 45-Grad-Winkel sowohl zu den zweiten als auch dritten Achsen positioniert ist;
wobei die ersten, zweiten und dritten Plattenwellenleiterabschnitte als Wellenleiter für rezirkulierendes Licht konfiguriert sind, das orthogonal zu einer von den ersten, zweiten und dritten Achsen definierten Ebene polarisiert ist.

2. Laser nach Anspruch 1, wobei jeder der ersten, zweiten und dritten Plattenwellenleiterabschnitte Freiraumeigenschaften in der von den ersten, zweiten und dritten Achsen definierten Ebene aufweist.

3. Laser nach Anspruch 2, wobei jeder der ersten, zweiten und dritten Plattenwellenleiterabschnitte Wellenleitereigenschaften in einer Richtung aufweist, die senkrecht zu der von den ersten, zweiten und dritten Achsen definierten Ebene ist.

4. Laser nach einem vorhergehenden Anspruch, wobei jeder der ersten, zweiten und dritten Plattenwellenleiterabschnitte teilweise von Keramikwänden des Keramikkörpers begrenzt sind, die sich parallel zu der von den ersten, zweiten und dritten Achsen definierten Ebene erstrecken.

5. Laser nach Anspruch 4, wobei die Keramikwände des Keramikkörpers, die sich parallel zu der von den ersten, zweiten und dritten Achsen definierten Ebene erstrecken, als Wellenleiter fungieren.

6. Laser nach einem vorhergehenden Anspruch, ferner umfassend eine Vielzahl von außerhalb des Keramikkörpers positionierten Elektroden, wobei die Vielzahl von Elektroden dafür konfiguriert ist, Teile (44) des Lasergases durch den Keramikkörper anzuregen, wenn ein Anregungssignal an die Vielzahl von Elektroden angelegt wird.

7. Laser nach Anspruch 6, wobei die Vielzahl von Elektroden so positioniert ist, dass nur Teile (44) des Lasergases in den ersten und zweiten Plattenwellenleiterabschnitten angeregt werden, wenn das Anregungssignal an die Vielzahl von Elektroden angelegt wird.

8. Laser nach Anspruch 6, wobei die Vielzahl von Elektroden so positioniert ist, dass Teile des Lasergases in dem dritten Plattenwellenleiterabschnitt nicht angeregt werden, wenn das Anregungssignal an die Vielzahl von Elektroden angelegt wird.

9. Laser nach Anspruch 6, wobei die Vielzahl von Elektroden so positioniert ist, dass Teile des Lasergases zwischen den ersten und zweiten Klappspiegeln nicht angeregt werden, wenn das Anregungssignal an die Vielzahl von Elektroden angelegt wird.

10. Laser nach Anspruch 6, wobei der Keramikkörper und die Vielzahl von Elektroden in einem luftdichten Gehäuse getragen werden, das aus einem nichtkeramischen Material gebildet ist.

11. Laser nach einem vorhergehenden Anspruch, wobei die ersten und zweiten Endspiegel einen instabilen negativen Zweigresonator (40) bilden.

12. Laser nach Anspruch 11, wobei ein Brennpunkt des instabilen negativen Zweigresonators zwischen den ersten und zweiten Klappspiegeln positioniert ist; optional der Brennpunkt (42) des instabilen negativen Zweigresonators an einem Mittelpunkt zwischen den ersten und zweiten Klappspiegeln positioniert ist.

13. Laser nach einem vorhergehenden Anspruch, wobei ein Radius einer reflektierenden Oberfläche des ersten Endspiegels kleiner als ein Radius einer reflektierenden Oberfläche des zweiten Endspiegels ist.

14. Laser nach einem vorhergehenden Anspruch, wobei sich der zweite Plattenwellenleiterabschnitt entlang der zweiten Achse um eine größere Distanz erstreckt, als sich der erste Plattenwellenleiterabschnitt entlang der ersten Achse erstreckt.

15. Laser nach einem vorhergehenden Anspruch, wobei eine erste Distanz zwischen dem ersten Endspiegel und dem ersten Klappspiegel kleiner als eine zweite Distanz zwischen dem zweiten Endspiegel und dem zweiten Klappspiegel ist.

## Revendications

1. Laser (10), comprenant :
un corps en céramique (12) définissant une chambre contenant un gaz de laser, la chambre comprenant une première section de guide d'ondes plan (14) s'étendant le long d'un premier axe (20), une deuxième section de guide d'ondes plan (16) s'étendant le long d'un deuxième axe (22), et une troisième section de guide d'ondes plan (18) s'étendant le long d'un troisième axe (24),
dans lequel les premier et deuxième axes sont parallèles l'un à l'autre, le troisième axe est perpendiculaire aux deux premier et deuxième axes, et des premières extrémités respectives des première et deuxième sections de guide d'ondes plan sont positionnées adjacentes à des extrémités opposées de la troisième section de guide d'ondes plan, dans lequel les première, deuxième et troisième sections de guide d'ondes plan ont toutes une hauteur s'étendant perpendiculairement à un plan défini par les premier, deuxième et troisième axes, la première section de guide d'ondes plan a une première largeur s'étendant perpendiculairement au premier axe et à la hauteur de la première section de guide d'ondes plan, la deuxième section de guide d'ondes plan a une deuxième largeur s'étendant perpendiculairement au deuxième axe et à la hauteur de la deuxième section de guide d'ondes plan, et la troisième section de guide d'ondes plan a une troisième largeur s'étendant perpendiculairement au troisième axe et à la hauteur de la troisième section de guide d'ondes plan, et dans lequel les première, deuxième et troisième largeurs sont toutes les trois plus grandes que la hauteur ;
un premier miroir d'extrémité (26) positionné au niveau d'une seconde extrémité de la première section de guide d'ondes plan qui est opposée à la première extrémité de la première section de guide d'ondes plan ;
un second miroir d'extrémité (28) positionné au niveau d'une seconde extrémité de la seconde section de guide d'ondes plan qui est opposée à la première extrémité de la seconde section de guide d'ondes plan ;
un premier miroir de repliement (32) positionné à proximité d'une intersection entre les premier et troisième axes à un angle de 45 degrés par rapport aux deux premier et troisième axes ; et
un second miroir repliement (34) positionné à proximité d'une intersection entre les deuxième et troisième axes à un angle de 45 degrés par rapport aux deux deuxième et troisième axes ;
dans lequel les première, deuxième et troisième sections de guide d'ondes plan sont configurées pour une recirculation de guide d'ondes d'une lumière qui est polarisée orthogonalement à un plan défini par les premier, deuxième et troisième axes.

2. Laser selon la revendication 1, dans lequel chacune des première, deuxième et troisième sections de guide d'ondes plan affiche des caractéristiques d'espace libre dans le plan défini par les premier, deuxième et troisième axes.

3. Laser selon la revendication 2, dans lequel chacune des première, deuxième et troisième sections de guide d'ondes plan affiche des caractéristiques de guide d'ondes dans une direction perpendiculaire au plan défini par les premier, deuxième et troisième axes.

4. Laser selon l'une quelconque des revendications précédentes, dans lequel chacune des première, deuxième et troisième sections de guide d'ondes plan sont partiellement délimitées par des parois de céramique du corps en céramique qui s'étendent parallèlement au plan défini par les premier, deuxième et troisième axes.

5. Laser selon la revendication 4, dans lequel les parois de céramique du corps en céramique qui s'étendent parallèlement au plan défini par les premier, deuxième et troisième axes servent de guides d'ondes.

6. Laser selon l'une quelconque des revendications précédentes, comprenant en outre une pluralité d'électrodes positionnées à l'extérieur du corps en céramique, les électrodes de la pluralité d'électrodes étant conçues pour exciter des parties (44) du gaz de laser par l'intermédiaire du corps en céramique lors de l'application d'un signal d'excitation aux électrodes de la pluralité d'électrodes.

7. Laser selon la revendication 6, dans lequel les électrodes de la pluralité d'électrodes sont positionnées de sorte que seules des parties (44) du gaz de laser se trouvant dans les première et deuxième sections de guide d'ondes plan soit excitées lors de l'application du signal d'excitation aux électrodes de la pluralité d'électrodes.

8. Laser selon la revendication 6, dans lequel les électrodes de la pluralité d'électrodes sont positionnées de sorte que des parties du gaz de laser se trouvant dans la troisième section de guide d'ondes plan ne soient pas excitées lors de l'application du signal d'excitation aux électrodes de la pluralité d'électrodes.

9. Laser selon la revendication 6, dans lequel les électrodes de la pluralité d'électrodes sont positionnées de sorte que des parties du gaz de laser se trouvant entre les premier et second miroirs de repliement ne soient pas excitées lors de l'application du signal d'excitation aux électrodes de la pluralité d'électrodes.

10. Laser selon la revendication 6, dans lequel le corps en céramique et les électrodes de la pluralité d'électrodes sont supportées à l'intérieur d'une enceinte étanche à l'air formée d'un matériau autre que de céramique.

11. Laser selon l'une quelconque des revendications précédentes, dans lequel les premier et second miroirs d'extrémité forment un résonateur instable à branche négative (40).

12. Laser selon la revendication 11, dans lequel un foyer du résonateur instable à branche négative est positionné entre les premier et second miroirs de repliement ; le foyer (42) du résonateur instable à branche négative étant éventuellement positionné au niveau d'un point milieu entre les premier et second miroirs de repliement.

13. Laser selon l'une quelconque des revendications précédentes, dans lequel un rayon d'une surface réfléchissante du premier miroir d'extrémité est plus petit qu'un rayon d'une surface réfléchissante du second miroir d'extrémité.

14. Laser selon l'une quelconque des revendications précédentes, dans lequel la deuxième section de guide d'ondes plan s'étend le long du deuxième axe sur une distance supérieure à la distance sur laquelle la première section de guide d'ondes plan s'étend le long du premier axe.

15. Laser selon l'une quelconque des revendications précédentes, dans lequel une première distance séparant le premier miroir d'extrémité et le premier miroir de repliement est inférieure à une seconde distance séparant le second miroir d'extrémité et le second miroir de repliement.
